# EUROPÄISCHE PATENTSCHRIFT

(11) **EP 2 038 551 B1**
(45) Veröffentlichungstag und Bekanntmachung des Hinweises auf die Patenterteilung: **11.04.2012**
(21) Anmeldenummer: 07729395.9
(22) Anmeldetag: 22.05.2007
(51) Int. Cl.: F04B 1/04

(54) **KOLBENPUMPE FÜR EIN FAHRZEUGBREMSSYSTEM MIT EINEM DICHTELEMENT**
PISTON PUMP FOR A VEHICLE BRAKING SYSTEM WITH A SEALING ELEMENT
POMPE À PISTON POUR UN SYSTÈME DE FREINAGE DE VÉHICULE COMPRENANT UN ÉLÉMENT D'ÉTANCHÉITÉ

(30) Priorität: 27.06.2006 DE 102006029368
(43) Veröffentlichungstag der Anmeldung: 25.03.2009
(73) Patentinhaber: Robert Bosch GmbH, 70442 Stuttgart (DE)
(72) Erfinder: SCHULLER, Wolfgang, 74389 Cleebronn (DE); ZIMMERMANN, Marc, 71720 Oberstenfeld (DE)
(86) Internationale Anmeldenummer: PCT/EP2007/054956
(87) Internationale Veröffentlichungsnummer: WO 2008/000557

(56) Entgegenhaltungen:
- WO-A-03/004872
- WO-A-2004/088137
- WO-A-2006/013142
- JP-A- 2004 124 850

## Beschreibung

### Hintergrund der Erfindung

Die Erfindung betrifft eine Kolbenpumpe für ein Fahrzeugbremssystem, mit einem Gehäuseabschnitt und einem Kolben, der in dem Gehäuseabschnitt verschiebbar geführt ist und ein Aufnahmemittel zur Aufnahme eines Einlassventils, ein an das Aufnahmemittel anschließendes Dichtelement zum Abdichten des Kolbens gegen den Gehäuseabschnitt und eine an das Dichtelement anschließende Kolbenstange aufweist

Die für bekannte Fahrzeugbremssysteme, insbesondere mit Antiblockiersystem (Abk.: ABS), verwendeten Kolbenpumpen dienen der Steuerung des Drucks in Radbremszylindern. Beim ABS sind die Kolbenpumpen beispielsweise zum Rückfördern von Bremsflüssigkeit aus einem oder mehreren Radbremszylindern in einen Hauptbremszylinder vorgesehen. Das ABS arbeitet oft in Kombination mit einer Antischlupftegelung (Abk.: ASR). Ein weiteres bekanntes System, das sogenannte elektronische Stabilitätsprogramm (Abk.: ESP) verbessert gegenüber ABS und ASR die Fahrsicherheit um einen weiteren Schritt. Während ABS und ASR in Fahrtlängsrichtung wirken, beeinflusst ESP die Querdynamik und ist daher im Prinzip eine Querschlupfregelung. Für alle diese Systeme und auch für weitere Systeme zur Erhöhung der Fahrsicherheit kommen Kolbenpumpen zum Einsatz.

Bekannte, für Fahrzeugbremssysteme vorgesehene Kolbenpumpen bestehen unter anderem aus einem in einem Gehäuse ausgebildeten Zylinder, in dem ein Kolben längsbeweglich aufgenommen ist. Der Kolbenantrieb erfolgt meist über einen Exzenterantrieb, bei dem die Drehbewegung einer mittels eines Antriebsmotors angetriebenen Welle in eine translatorische Bewegung des Kolbens umgesetzt wird. Die Kolbenstange wird dabei mit seiner Stirnseite mittels eines Vorspannelements, beispielsweise in Form einer Schraubenfeder, gegen den Außenumfang des Exzenters des Exzenterantriebs gedrückt. So kann letztlich eine hin- und hergehende Pumpbewegung des Kolbens realisiert werden.

Ferner weisen bekannte Kolbenpumpen zur Steuerung der Fluid-Einströmung ein als Sitzventil ausgebildetes Einlassventil auf, wobei in dem Zylinder zwischen dem Einlassventil und dem Kolben ferner ein Dichtelement vorgesehen ist, das längsbeweglich in dem Zylinder geführt ist. Der Kolben bekannter Kolbenpumpen ist mit seiner innerhalb des Zylinders angeordneten Stirnseite an dem Dichtelement angebracht, so dass eine hin- und hergehende Kolbenbewegung unmittelbar auf das Dichtelement übertragen wird. An dem dem Einlassventil zugewandten Ende des Dichtelements ist ein Ventilsitz des als Sitzventil ausgebildeten Einlassventils ausgebildet, wobei zur Fluideinströmung eine sich durch das Dichtelement erstreckende Bohrung vorgesehen ist, die sich bis zum Ventilsitz erstreckt, um das in der Saugphase geöffnete Einlassventil mit Fluid zu durchströmen. Der Absperrkörper des als Sitzventil ausgebildeten Einlassventils wird über ein Federelement gegen den an dem Dichtelement ausgebildeten Ventilsitz gedrückt, wobei der Absperrkörper, das Federelement und das als Ventilsitz ausgebildete Ende des Dichtelements in einem Aufnahmemittel in Form eines Einlass-Ventildeckels aufgenommen sind. Der Einlassventil-Deckel dient als Gegenhalter für das Federelement und als Führung für den Absperrkörper. Um den Einlassventil-Deckel herum ist ein Vorspannelement in Form einer Schraubenfeder angeordnet, die gegen einen an dem Einlassventil-Deckel ausgebildeten Abstützkörper drückt, der in einer in dem Dichtelement ausgebildeten Ausnehmung aufgenommen ist, um die auf den Abstützkörper übertragene Federkraft über das Dichtelement auf den am Dichtelement angebrachten Kolben zu übertragen Auf diese Weise kann letztlich eine Vorspannung auf den Kolben übertragen werden, um die außenliegende Stirnseite des Kolbens gegen den Exzenter des Exzenterantriebs zu drücken.

Insgesamt betrachtet ist damit in dem Zylinder bekannter Kolbenpumpen eine Vielzahl Pumpenbauteile angeordnet. Dies hat zur Folge, dass die Montage und Demontage bekannter Kolbenpumpen vergleichsweise aufwendig ist. Ferner sind bekannte Kolbenpumpen aufgrund der Vielzahl vorgesehener Pumpenbauteile nicht besonders kostengünstig herstellbar.

Aus WO 2006/013142 A (nächster Stand der Technik) ist eine Kolbenpumpe mit einer Haltevorrichtung zum Halten eines Federelements für eine Rückstellung eines Schließelements eines Ventils bekannt. Die Haltevorrichtung liegt dabei mit einem Dichtbereich auf einer Stirnseite des Kolbens auf.

### Zugrundeliegende Aufgabe

Der Erfindung liegt die Aufgabe zugrunde, eine Kolbenpumpe für ein Fahrzeugbremssystem anzugeben, die mit geringem Aufwand montiert und demontiert werden kann, und die zudem kostengünstig hergestellt werden kann.

### Erfindungsgemäße Lösung

Diese Aufgabe ist erfindungsgemäß mit der eingangs genannten Kolbenpumpe für ein Fahrzeugbremssystem gelöst, bei der das Dichtelement einstückig mit dem Aufnahmemittel ausgebildet ist und zwischen dem Dichtelement und der Kolbenstange eine Schnappverbindung ausgebildet ist, um die Kolbenstange am Dichtelement vorzumontieren.

Erfindungsgemäß ist das Dichtelement einstückig mit dem Aufnahmemittel ausgebildet. Dies hat den Vorteil, dass im Unterschied zu den aus dem Stand der Technik bekannten Kolbenpumpen die Funktionen des Dichtelements und des zur Aufnahme eines Einlassventils vorgesehenen Aufnahmemittels von lediglich einem Bauteil übernommen werden. So wird erfindungsgemäß gegenüber den bekannten Lösungen ein Bauteil eingespart, mit der Folge, dass die Montage und Demontage der erfindungsgemäßen Kolbenpumpe sehr einfach vorgenommen werden kann und die Toleranzkette deutlich herabgesetzt wird. Ferner können durch die erfindungsgemäß realisierte Einsparung eines Bauteils die Herstellungskosten der Kolbenpumpe deutlich reduziert werden. Schließlich kann die erfindungsgemäße Kolbenpumpe durch die Einsparung eines Bauteils gegenüber bekannten Pumpen deutlich kleiner ausgeführt werden. Die Schnappverbindung, welche vorzugsweise an dem Dichtelement ausgebildet ist, umgreift beispielsweise eine an der Kolbenstange ausgebildete Schulter. Mittels der erfindungsgemäßen Schnappverbindung kann die Kolbenstange während der Montage der Kolbenpumpe, insbesondere während der Montage am Zylinder über die erfindungsgemäß bereitgestellte Schnappfunktion am Dichtelement gehalten werden. Des Weiteren wird mittels der erfindungsgemäßen Schnappverbindung die Zylinderinnenwand gegenüber dem Außendurchmesser des Kolbens geschützt. Mittels der erfindungsgemäßen Schnappverbindung wird so eine eventuelle Berührung des Kolbens mit der Zylinderinnenwand ausgeschlossen, wodurch Beschädigungen an der Zylinderinnenwand oder an dem Kolben vermieden werden.

### Vorteilhafte Weiterbildungen der Erfindung

Bei einer vorteilhaften Weiterbildung der Erfindung weist das Einlassventil einen Ventilsitz auf, der an der Kolbenstange ausgebildet ist. Diese erfindungsgemäße konstruktive Lösung ermöglicht eine einfache Montage bzw. Demontage der Kolbenpumpe. So ist insbesondere zur Demontage der Kolbenpumpe die an das Dichtelement anschließende Kolbenstange von dem Dichtelement zu entfernen. Anschließend kann das Einlassventil, das vorzugsweise als Sitzventil ausgebildet ist, samt seiner einzelnen Komponenten, umfassend insbesondere einen Absperrkörper und ein Federelement, ohne großen Aufwand aus dem einstückig mit dem Dichtelement ausgebildeten Aufnahmemittel entnommen werden. Das in dem Zylinder der Kolbenpumpe längsbeweglich aufgenommene Dichtelement, an dem das Aufnahmemittel einstückig ausgebildet ist, kann schließlich problemlos aus dem Zylinder entnommen werden.

Bei einer weiteren vorteilhaften Weiterbildung der Erfindung ist ein Vorspannelement, vorzugsweise in Form einer Schraubenfeder vorgesehen, das an dem Dichtelement anliegt und mit dem der Kolben in Richtung aus dem Gehäuseabschnitt herausgedrängt ist. Die von dem Vorspannelement auf das Dichtelement übertragene Vorspannkraft hält den Kolben stets in Außenlage. Auf diese Weise kann erfindungsgemäß die außenliegende Stirnseite des Kolbens gegen den Exzenter eines Exzenterantriebs gedrückt werden, um so eine von dem Exzenterantrieb bereitgestellte translatorische Antriebsbewegung in eine hin- und hergehende Pumpbewegung des Kolbens umzusetzen. Mittels des Vorspannelements kann die erfindungsgemäße Kolbenpumpe in Verbindung mit Exzenterantrieben verwendet werden, die in Bremssystemen zum Antrieb der Kolbenpumpen vorzugsweise verwendet werden.

Bei einer praktischen Weiterbildung der Erfindung ist das Dichtelement in Form eines Dichtrings mit einer Dichtringöffnung ausgebildet und die Kolbenstange ist in der Dichtringöffnung aufgenommen, wobei die Kolbenstange vorzugsweise mit einer Spielpassung in der Dichtringöffnung aufgenommen ist. Mittels einer Spielpassung kann die Kolbenstange problemlos in der Dichtringöffnung zentriert werden. Ferner ermöglicht eine Spielpassung ein für Demontagezwecke erforderliches problemloses Lösen der Kolbenstange aus der Dichtringöffnung.

### Kurzbeschreibung der Zeichnungen

Nachfolgend werden Ausführungsbeispiele einer erfindungsgemäßen Kolbenpumpe anhand der beigefügten schematischen Zeichnungen näher erläutert. Es zeigt:
- Fig. 1: einen Längsschnitt einer erfindungsgemäßen Kolbenpumpe,
- Fig. 2: einen Längsschnitt einer Kolbenpumpe des Standes der Technik,

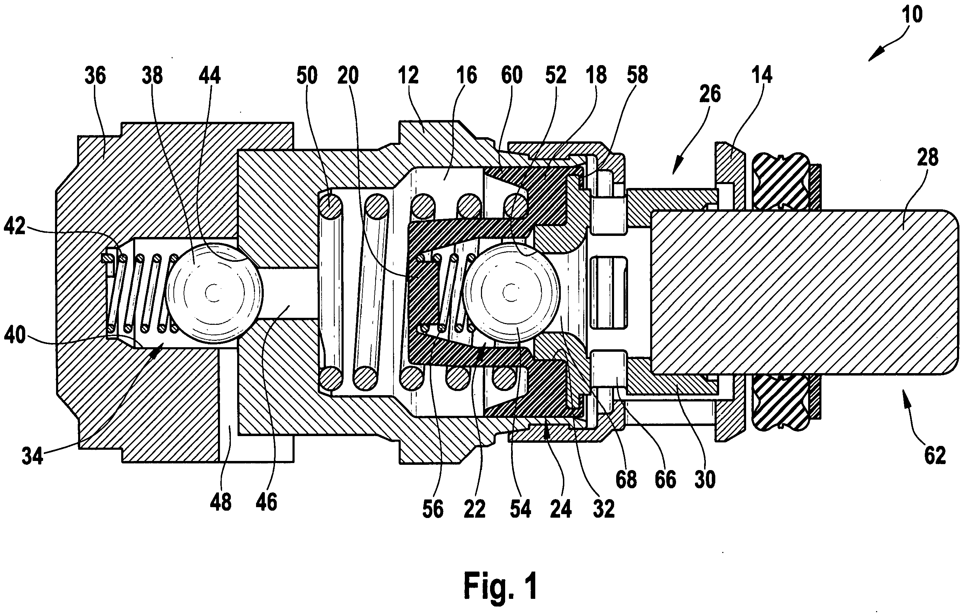

Die Fig. 1 zeigt eine erfindungsgemäße Kolbenpumpe 10. Die Kolbenpumpe 10 umfasst zwei Gehäuseabschnitte 12 und 14, wobei in dem Gehäuseabschnitte 12 eine Zylinderbohrung 16 ausgebildet ist, in der ein Kolben 26 verschiebbar geführt ist. Der Kolben 26 umfasst ein Dichtelement in Form eines Dichtrings 18, ein Aufnahmemittel 20 für ein als Kugelsitzventil ausgebildetes Einlassventil 22, welches einstückig mit dem Dichtring 18 ausgebildet ist und vorliegend als Einlassventil-Deckel ausgebildet ist, und eine Kolbenstange 62, die an den

Dichtring 18 anschließt. Die Kolbenstange 62 ist zweistückig ausgebildet und umfasst zwei Kolbenstangenelemente 28, 30, wobei das Kolbenstangenelement 28 mittels einer Presspassung fest in dem Kolbenstangenelement 30 aufgenommen ist, um eine kraftschlüssige Verbindung zwischen den beiden Kolbenstangenelementen 28, 30 zu schaffen. Durch die vorgesehene zweistückige Ausbildung der Kolbenstange 62 kann eine kostengünstig herzustellende Kolbenstange 62 realisiert werden, da erfindungsgemäß ein kostengünstiges stangenförmiges Kolbenstangenelement 28 mit einem Kolbenstangenelement 30 verbunden wird, das sehr kostengünstig in Form eines Kunststoffspritzteils, Drehteils, Gussteils oder Kaltschlagteils bereitgestellt werden kann.

Das als Einlassventil-Deckel gestaltete Aufnahmeelement 20 und der Dichtring 18 bilden zusammen eine einstückige Ventildeckel/Dichtring-Kombination 24. Das Kolbenstangenelement 30 ist zur Verbindung der Kolbenstange 62 mit dem Dichtring 18 in der Dichtringöffnung 32 des Dichtrings 18 aufgenommen.

Die Kolbenpumpe 10 weist ferner ein als Kugelsitzventil ausgebildetes Auslassventil 34 auf, das innerhalb eines Auslassventil-Deckels 36 angeordnet ist, wobei eine Kugel 38 des Kugelsitzventils 34 in einer in dem Auslassventil-Deckel 36 ausgebildeten Aufnahme 40 geführt ist. Der Auslassventil-Deckel 36 kann teilweise spanabhebend oder kaltgeschlagen gefertigt sein. Eine sich am Deckelboden abstützende Schraubenfeder 42 drückt die Kugel 38 gegen einen im Gehäuseabschnitt 12 der Kolbenpumpe 10 ausgebildeten Ventilsitz 44, der an ein in dem Gehäuseabschnitt 12 ausgebildetes Auslassloch 46 angrenzt. Von dem Auslassloch 46 durch das Auslassventil 34 strömende Bremsflüssigkeit strömt über einen Radialkanal 48 zwischen dem Auslassventil-Deckel 36 und dem Gehäuseabschnitt 12 in Richtung Pumpen-Auslass (nicht dargestellt).

In der in dem Gehäuseabschnitt 12 ausgebildeten Zylinderbohrung 16 ist ferner ein Vorspannelement in Form einer Schraubenfeder 50 angeordnet, die mit einem Ende an dem Dichtring 18 anliegt und sich mit dem anderen Ende am Boden des Gehäuseabschnitts 12 abstützt. Die Schraubenfeder 50 steht unter Vorspannung, um die zweistückige Kolbenstange 62 über den Dichtring 18, an dem die Kolbenstange 62 mit ihrer innerhalb der Kolbenpumpe 10 angeordneten Stirnseite anliegt, gegen den Umfang des Exzenters eines Exzenterantriebs (nicht dargestellt) zu drücken. So kann die au-βen liegende Stirnseite des Kolbenstangenelements 28 stets in Anlage zu dem Exzenter gehalten werden. Durch rotierenden Antrieb des Exzenters wird der gesamte Kolben 26 zu einer axial hin- und hergehenden Hubbewegung angetrieben, die in bekannter Weise eine Förderung von Bremsflüssigkeit bewirkt.

Der Ventilsitz 52 des Kugel-Einlassventils 22, der beispielsweise durch Kugelprägen hergestellt werden kann, ist stirnseitig an dem Kolbenstangenelement 30 ausgebildet. Diese erfindungsgemäße Ausbildung des Ventilsitzes 52 an dem Kolbenstangenelement 30 der Kolbenstange 62 bietet in Verbindung mit der erfindungsgemäßen einstückigen Ausbildung des Dichtrings 18 mit dem als Einlassventil-Deckel gestalteten Aufnahmemittel 20 in Form der Ventildeckel/Dichtring-Kombination 24 deutliche Vorteile bei der Montage bzw. Demontage der Kolbenpumpe 10. Zur Demontage der Kolbenpumpe 10 ist das mit einer Spielpassung in der Dichtringöffnung 32 aufgenommene Kolbenstangenelement 30 aus der Dichtringöffnung 32 zu ziehen. Die erfindungsgemäße vorgesehene Spielpassung ermöglicht hierbei ein problemlosen Lösen des Kolbenstangenelements 30 aus dem Dichtring 18. Die einzelnen Komponenten des Sitzventils 22, also die Kugel 54 und die Schraubenfeder 56 können anschließend problemlos aus dem Aufnahmemittel 20 entnommen werden. Schließlich kann nach Herausziehen der einstückig ausgebildeten Ventildeckel/Dichtring-Kombination 24 aus der Zylinderbohrung 16 die Schraubenfeder 50 aus der Zylinderbohrung 16 entnommen werden. Entsprechend einfach gestaltet sich auch die Montage der Kolbenpumpe 10, wobei die vorgesehene Spielpassung eine problemlose Zentrierung des Kolbenstangenelements 30 in der Dichtringöffnung 32 ermöglicht.

An dem Dichtring 18 ist ferner eine Schnappverbindung in Form einer Schnappnase 58 ausgebildet, die eine am dem Kolbenstangenelement 30 ausgebildete Schulter umgreift. Mittels der Schnappnase 58 kann die Kolbenstange 62 während der Montage der Kolbenpumpe 10, insbesondere während der Montage an der Zylinderbohrung 16 an dem Dichtring 18 gehalten werden, wodurch die Montage der erfindungsgemäßen Kolbenpumpe 10 wesentlich vereinfacht wird. Die so erfindungsgemäß realisierte Haltefunktion kann alternativ auch durch eine thermische Verformung nach Aufstecken der Ventildeckel/Dichtring-Kombination 24 auf das Kolbenstangenelement 30 realisiert werden. Die Schnappnase 58 übernimmt erfindungsgemäß lediglich die beschriebene, für Montagezwecke vorteilhafte Haltefunktion. Während des Betriebs der Kolbenpumpe 10 wird durch die Federkraft der Schraubenfeder 50 sichergestellt, dass die Ventildeckel/Dichtring-Kombination 24 permanent, trotz der für Montagezwecke vorteilhaften Spielpassung, an dem Kolbenstangenelement 30 in axialer Richtung anliegt. Ferner wirkt die Schnappnase 58 schützend zwischen der Zylinderbohrung 16 und dem Kolbenstangenelement 30. An dem Dichtring 18 der Ventildeckel/Dichtring-Kombination 24 ist ferner eine Dichtlippe 60 ausgebildet, welche den Zylinderraum zwischen Kolben 26 und Zylinderbohrung 16 radial druckdicht abschließt.

Schließlich weist die Kolbenpumpe 10 eine in dem Kolbenstangenelement 30 ausgebildete Radialbohrung 66 und eine zentrale Axialbohrung 68 auf, durch die Fluid von außerhalb der Kolbenpumpe durch das Einlassventil 22 strömen kann.

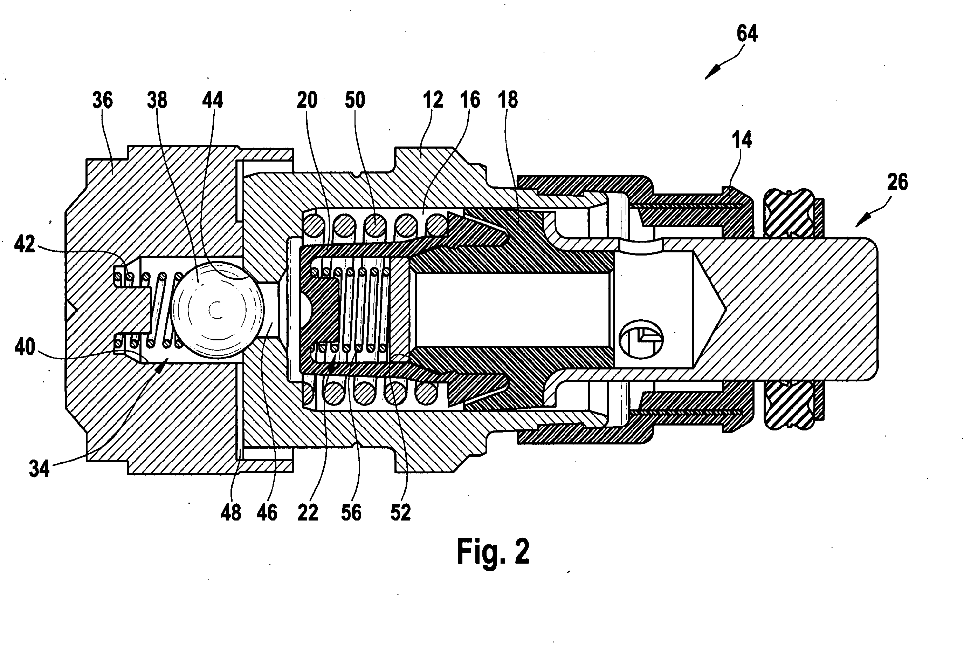

Die Fig. 2 zeigt eine Schnittansicht eine Kolbenpumpe 64 des Standes der Technik. Im Unterschied zu der erfindungsgemäßen Kolbenpumpe 10 sind bei der bekannten Kolbenpumpe 64 insbesondere das Aufnahmemittel 20 und der Dichtring 18 separate Bauteile, was die Demotage bzw. Montage der bekannten Kolbenpumpe 64 deutlich erschwert und im Unterschied zu der erfindungsgemäßen Kolbenpumpe 10 eine längere Toleranzkette mit sich bringt. Auch ist kein Berührungsschutz zwischen der Zylinderbohrung 16 und dem Kolben 26 vorgesehen.

## Patentansprüche

1. Kolbenpumpe (10) für ein Fahrzeugbremssystem, mit einem Gehäuseabschnitt (12) und einem Kolben (26), der in dem Gehäuseabschnitt (12) verschiebbar geführt ist und ein Aufnahmemittel (20) zur Aufnahme eines Einlassventils (22), ein an das Aufnahmemittel (20) anschließendes Dichtelement (18) zum Abdichten des Kolbens (26) gegen den Gehäuseabschnitt (12) und eine an das Dichtelement (18) anschließende Kolbenstange (62) aufweist, bei der
- das Dichtelement (18) einstückig mit dem Aufnahmemittel (20) ausgebildet ist **dadurch gekennzeichnet, dass**
- zwischen dem Dichtelement (18) und der Kolbenstange (62) eine Schnappverbindung (58) ausgebildet ist, um die Kolbenstange (62) am Dichtelement (18) vorzumontieren.

2. Kolbenpumpe nach Anspruch 1,
**dadurch gekennzeichnet, dass** das Einlassventil (22) einen Ventilsitz (52) aufweist, der an der Kolbenstange (62) ausgebildet ist.

3. Kolbenpumpe nach Anspruch 1 oder 2,
**dadurch gekennzeichnet, dass** ein Vorspannelement, vorzugsweise in Form einer Schraubenfeder (50) vorgesehen ist, das an dem Dichtelement (18) anliegt und mit dem der Kolben (26) in Richtung aus dem Gehäuseabschnitt (12) herausgedrängt ist.

4. Kolbenpumpe nach einem der Ansprüche 1 bis 3,
**dadurch gekennzeichnet, dass** das Dichtelement (18) in Form eines Dichtrings mit einer Dichtringöffnung (18) ausgebildet und die Kolbenstange (62) in der Dichtringöffnung (32) aufgenommen ist.

5. Kolbenpumpe nach Anspruch 4,
**dadurch gekennzeichnet, dass** die Kolbenstange (62) mit einer Spielpassung in der Dichtringöffnung (32) aufgenommen ist.

## Claims

1. Piston pump (10) for a vehicle brake system, with a housing portion (12) and with a piston (26) which is guided displaceably in the housing portion (12) and has a reception means (20) for receiving an inlet valve (22), a sealing element (18), adjacent to the reception means (20), for sealing off the piston (26) with respect to the housing portion (12), and a piston rod (62) adjacent to the sealing element (18), in which piston pump
- the sealing element (18) is formed in one piece with the reception means (20),
**characterized in that**
- a snap connection (58) is formed between the sealing element (18) and the piston rod (62) in order to premount the piston rod (62) on the sealing element (18).

2. Piston pump according to Claim 1,
**characterized in that** the inlet valve (22) has a valve seat (52) which is formed on the piston rod (62).

3. Piston pump according to Claim 1 or 2,
**characterized in that** a prestressing element, preferably in the form of a helical spring (50), is provided, which bears against the sealing element (18) and by means of which the piston (26) is urged in a direction out of the housing portion (12).

4. Piston pump according to one of Claims 1 to 3,
**characterized in that** the sealing element (18) is designed in the form of a sealing ring with a sealing-ring orifice (32), and the piston rod (62) is received in the sealing-ring orifice (32).

5. Piston pump according to Claim 4,
**characterized in that** the piston rod (62) is received with a clearance fit in the sealing-ring orifice (32).

## Revendications

1. Pompe à piston (10) pour un système de freinage de véhicule, comprenant une portion de boîtier (12) et un piston (26) qui est guidé de manière à pouvoir coulisser dans la portion de boîtier (12), et un moyen formant logement (20) pour recevoir une soupape d'admission (22), un élément d'étanchéité (18) se raccordant au moyen formant logement (20) pour étancher le piston (26) vis-à-vis de la portion de boîtier (12) et une tige de piston (62) se raccordant à l'élément d'étanchéité (18), dans laquelle pompe à piston :
- l'élément d'étanchéité (18) est réalisé d'une seule pièce avec le moyen formant logement (20),
**caractérisée en ce :**
- **qu'**une connexion par encliquetage (58) est réalisée entre l'élément d'étanchéité (18) et la tige de piston (62), afin de prémonter la tige de piston (62) sur l'élément d'étanchéité (18).

2. Pompe à piston selon la revendication 1, **caractérisée en ce que** la soupape d'admission (22) présente un siège de soupape (52) qui est réalisé sur la tige de piston (62).

3. Pompe à piston selon la revendication 1 ou 2, **caractérisée en ce qu'**un élément de précontrainte est prévu, de préférence sous la forme d'un ressort hélicoïdal (50), qui s'applique contre l'élément d'étanchéité (18) et avec lequel le piston (26) est repoussé hors de la portion de boîtier (12).

4. Pompe à piston selon l'une quelconque des revendications 1 à 3,
**caractérisée en ce que** l'élément d'étanchéité (18) est réalisé sous la forme d'une bague d'étanchéité avec une ouverture de bague d'étanchéité (32) et la tige de piston (62) est reçue dans l'ouverture de bague d'étanchéité (32).

5. Pompe à piston selon la revendication 4,
**caractérisée en ce que** la tige de piston (62) est reçue avec un ajustement avec jeu dans l'ouverture de bague d'étanchéité (32).
